# EUROPEAN PATENT SPECIFICATION

(11) **EP 3 546 257 B1**
(45) Date of publication and mention of the grant of the patent: **10.03.2021**
(21) Application number: 19165382.3
(22) Date of filing: 27.03.2019
(51) Int. Cl.: B60H 1/00, F28F 3/02, F28D 9/00, B60H 1/32

(54) **AIR CONDITIONING SYSTEM FOR BUSES**
KLIMATISIERUNGSSYSTEM FÜR BUSSE
SYSTÈME DE CLIMATISATION POUR BUS

(30) Priority: 29.03.2018 IT 201800004061
(43) Date of publication of application: 02.10.2019
(73) Proprietor: DENSO THERMAL SYSTEMS S.p.A., 10046 Poirino (Torino) (IT)
(72) Inventor: NAPOLI, Pasquale, I-10046 POIRINO (Torino) (IT); DI TONNO, Massimo, I-10046 POIRINO (Torino) (IT); CAGLIERO, Stefano, I-10046 POIRINO (Torino) (IT); GATALETA, Raffaele, I-10046 POIRINO (Torino) (IT)
(74) Representative: Vanzini, Christian

(56) References cited:
- EP-A1- 2 998 676
- EP-A1- 3 096 106
- WO-A1-01/88454
- DE-A1-102016 013 340
- US-B2- 8 122 736

## Description

The present invention refers to an air conditioning system for buses, of the type comprising a refrigerant circuit for the circulation of a refrigerant fluid, the refrigerant circuit comprising a compressor, a condenser, an expansion valve and an evaporator.

In known systems the condenser is air-cooled.

WO 01/88454 A1 discloses an air conditioning system having the features of the preamble of claim 1, and being however not specifically adapted for buses.

One of the aims of the present invention is to make available an air conditioning system for buses that is able to perform better than known systems.

Therefore, the object of the invention is a system having the features of claim 1. In this system, the condenser is a water-cooled condenser, the condenser being designed for heat exchange between the refrigerant fluid and water in a water circuit, wherein the water is cooled by means of a radiator,
wherein the condenser is formed by a plate heat exchanger, comprising
- a first and a second support end plate on which are arranged inlet and outlet connectors for refrigerant fluid and water,
- a stack of heat exchange plates interposed between said first and second support end plates, between which there is defined a plurality of first compartments for the passage of the refrigerant fluid and a plurality of second compartments for the passage of water, alternating with the first compartments, and
- a plurality of finned sheets, each of which is arranged within a respective first or second compartment,
wherein on each of these first and second support end plates of the condenser a respective reinforcement plate is brazed externally, the reinforcement plate covering a central area of the support end plate, leaving four corner areas of the support end plate uncovered,
wherein each finned sheet extends in such a way as to cover almost entirely the extension of the respective compartment, defining at least one free area wherein the finned sheet is absent, said free area being positioned around a duct for the transport of fluid to or from the compartment, said duct being arranged in a corner of the compartment, wherein the opposite heat exchange plates that delimit the compartment have, in the free area, respective protrusions in contact with each other, said protrusions defining at least one fluid passage opening arranged at the perimeter of said duct and connecting the compartment to said duct.

With the present invention it is therefore possible to achieve better performance compared to the prior art, due to the fact that the heat capacity of the water is higher than that of the air.

The particular configuration of the plate heat exchanger makes it possible to make a larger heat exchanger than those used for automotive applications, at the same time allowing the system to withstand higher water-side pulsating pressures than those to which plate heat exchangers for automotive applications are subjected. In addition, such configuration allows the system to withstand higher mechanical stresses (e.g. vibrations) than automotive applications.

Preferred embodiments of the invention are defined in the dependent claims, which are intended as an integral part of the present description.

Further features and advantages of the system according to the invention will become more apparent in the following detailed description of an embodiment of the invention, made with reference to the accompanying drawings, provided purely to be illustrative and non-limiting, wherein:
- figure 1 represents a diagram representing an air conditioning system for buses according to the invention;
- figure 2 is a perspective view in cross-section of a condenser used in the system in figure 1;
- figure 3 is an exploded view of the condenser in figure 2;
- figures 4 and 5 are views respectively in plan and in cross-section of a support end plate coupled to a heat exchange plate of the condenser in figure 2;
- figures 6 and 7 are views respectively in plan and in cross-section of a pair of heat exchange plates of the condenser in figure 2.

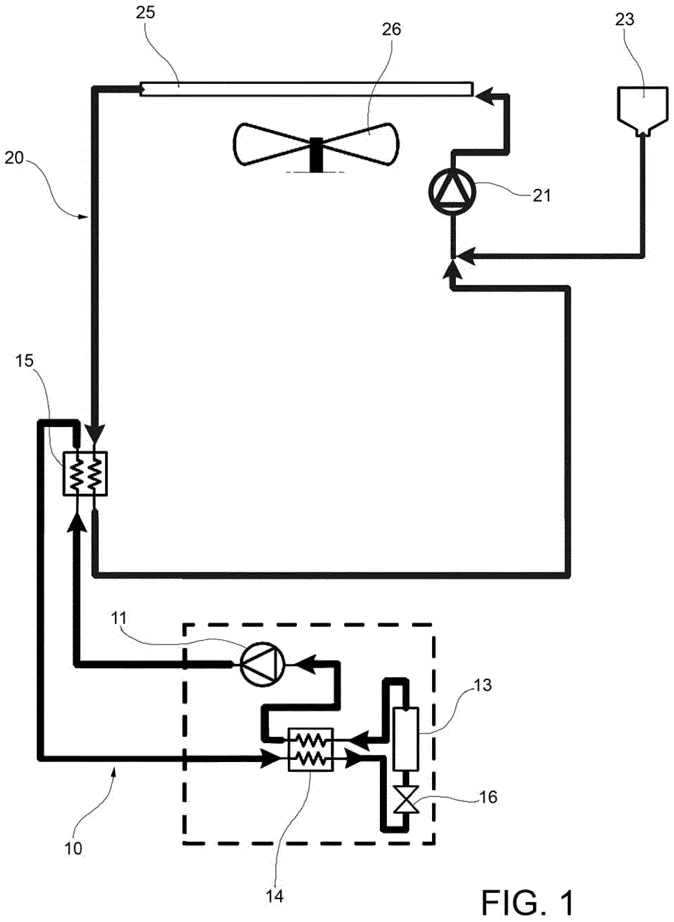

Figure 1 represents the architecture of an air conditioning system for buses according to the invention.

The air conditioning system comprises a refrigerant circuit 10, comprising a compressor 11 for the circulation of a refrigerant fluid in the refrigerant circuit 10. The circuit also comprises an expansion valve 16 and an evaporator 13 conventionally provided for heat exchange between the refrigerant fluid and the air intended to be introduced into the passenger compartment of the bus; such evaporator may be coupled to an internal heat exchanger 14 provided for heat exchange between the vapor phase and the liquid phase of the refrigerant fluid. The expansion valve 16 is arranged at the inlet of the evaporator 13, in particular, it is an integral part of the inlet interface of the evaporator 13.

The refrigerant circuit 10 further comprises a water-cooled condenser 15.

The condenser 15 is thus provided for heat exchange between the refrigerant and the water in a water circuit 20. Naturally, for the purposes of the present invention, it is intended that water may be mixed with other substances, such as an antifreeze product.

The water circuit 20 further comprises a pump 21 for the circulation of water in the water circuit 20 and an expansion tank 23. Finally, the circuit 20 comprises a low-temperature radiator 25, by means of which the water in the circuit 20 is cooled due to heat exchange with the ambient external air, conveyed to the radiator by a fan 26.

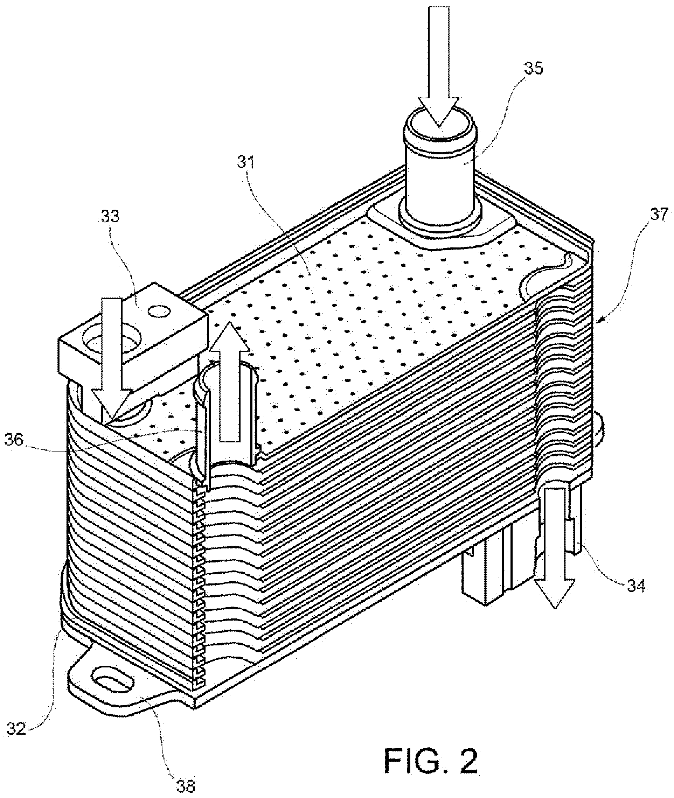

With reference to figures 2 to 7, the condenser 15 consists in particular of a plate heat exchanger.

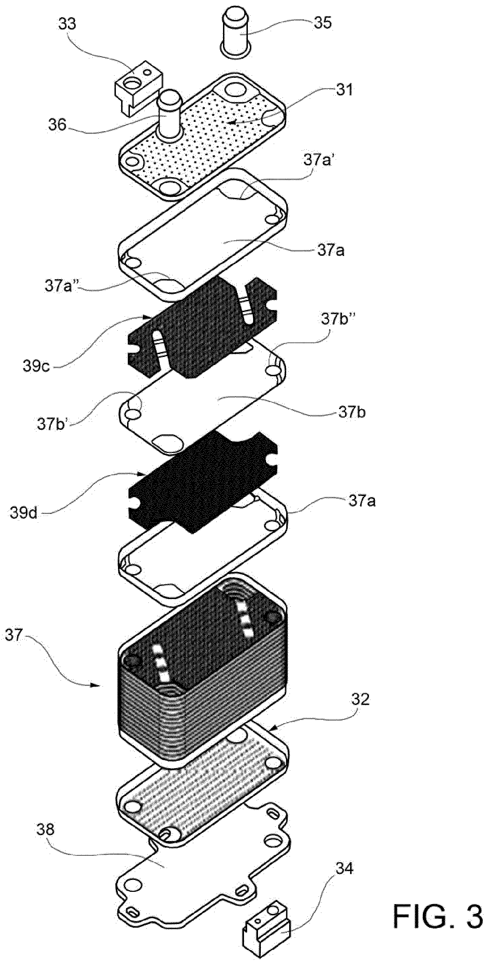

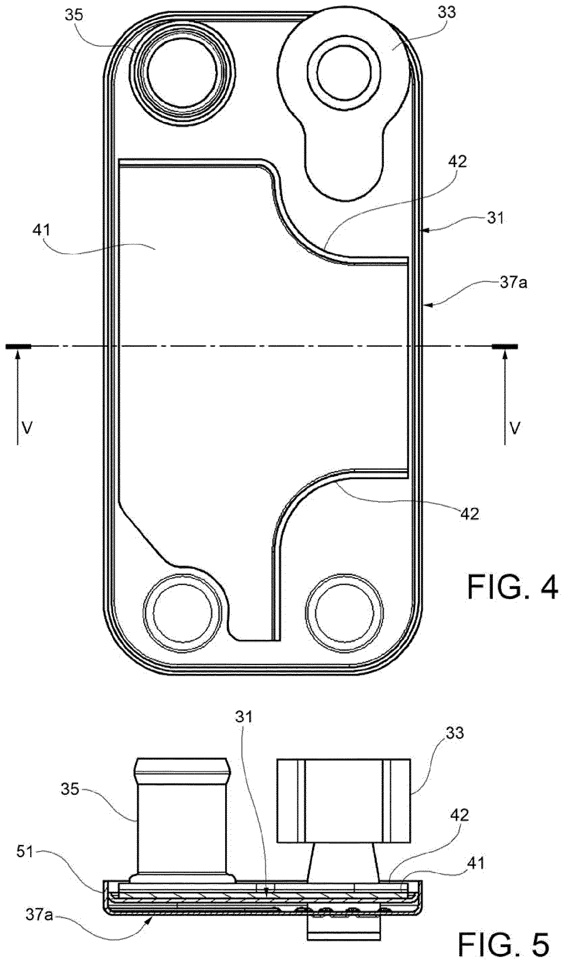

The condenser 15 comprising a first support end plate, or top end plate 31 and a second support end plate, or bottom end plate 32, on which inlet and outlet connectors 33 and 34 respectively are arranged for the refrigerant fluid, as well as inlet and outlet connectors 35 and 36 respectively for the water. The arrangement of the inlet and outlet connectors 33-36 is not relevant to the invention. For example, there may be three connectors on the upper end plate 31, and one on the lower plate, as shown in figures 2 and 3, or two connectors on the upper plate as shown in figures 4 and 5, and thus the other two connectors on the lower plate.

One of the support end plates 31 and 32, for example the lower plate 32, is fixed to a mounting plate 38, through which the condenser 15 may be mounted on a support structure of the bus (not shown). A stack of heat exchange plates 37, consisting of two types of heat exchange plates 37a, 37b, alternating with each other, is placed between the support end plates 31 and 32. Between such heat exchange plates 37a and 37b there is therefore conventionally defined a plurality of first compartments for the passage of water and a plurality of second compartments for the passage of refrigerant fluid, which alternate with the first compartments. Each of the first compartments receives water from the water inlet connector 35 through a respective passage or duct 37a', aligned and connected with the water inlet connector 35 and formed in a corner of the first compartment, and transfers the water to the water outlet connector 36 through a respective passage or duct 37a", aligned and connected with the water outlet connector 36 and formed in another corner of the first compartment. Each of the second compartments receives the refrigerant fluid from the refrigerant inlet connector 33 through a respective passage or duct 37b', aligned and connected with the refrigerant inlet connector 33 and formed in a corner of the second compartment, and transfers the refrigerant fluid to the refrigerant outlet connector 34 through a respective passage or duct 37b", aligned and connected with the refrigerant outlet connector 34 and formed in another corner of the second compartment.

The end support plates 31, 32 with the connectors 33-36 and the heat exchange plates are joined together by a brazing process to form a single body.

Within each of the first compartments there is a respective finned sheet 39c conventionally provided to increase the turbulence of the water flowing in the first compartment and to increase the secondary heat exchange surface. Within each of the second compartments is arranged a respective finned sheet 39d conventionally provided to increase the turbulence of the refrigerant fluid flowing into the second compartment and to increase the secondary heat exchange surface.

With reference to figures 4 and 5, the first support end plate 31 is represented, coupled to the first heat exchange plate of the stack 37, indicated at 37a'.

On the outer side of the first support end plate 31 is brazed a reinforcement plate 41 to cover a central area of the support end plate 31, leaving at least one corner area of the support end plate 31 free. In the example shown, all four corner areas are left free. Preferably, the reinforcement plate 41 comprises at least one folded edge 42 extending outwardly from the support end plate 31. A similar reinforcement plate may also be provided on the outer side of the second support end plate 32.

Such reinforcement plate allows the structural strength of the condenser 15 to be increased and thus makes it suitable for use in the system described above with reference to figure 1, which provides for relatively high operating pressures and mechanical stresses.

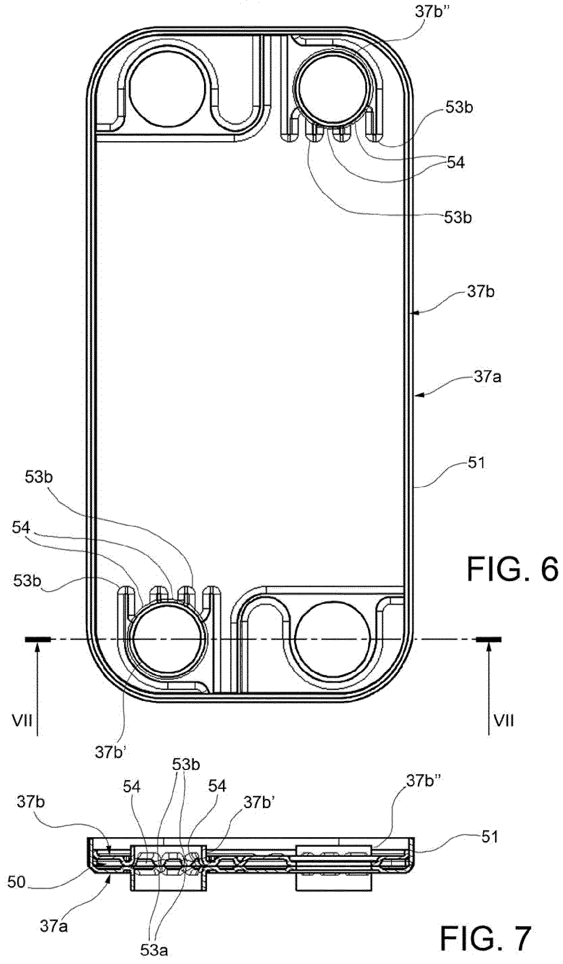

With reference to figures 6 and 7, a pair of heat exchange plates 37a, 37b are shown, coupled together. The plate 37a is also defined as the outer plate, while the plate 37b is also defined as the inner plate, because, as may be seen in figure 7, it is enclosed within the edge of the outer plate. The stack 37 is formed by stacking such pairs. It is understood, however, that the following description does not only concern the pair represented but concerns all pairs of heat exchange plates adjacent to each other.

Each (first or second) compartment, indicated at 50, is delimited peripherally by a folded peripheral edge 51 of a respective heat exchange plate 37a. The surface area of such compartment is thus defined by the area enclosed by the peripheral edge 51 of the heat exchange plate 37a.

The finned sheet (39c or 39d), which is placed within the compartment 50 (for clarity of illustration not shown in figure 7), extends in such a way as to cover almost the entire extension of compartment 50. Therefore, free areas remain not covered by the finned sheet, where the finned sheet is thus absent. Such free areas are in particular positioned around the ducts or passages (37a', 37a", 37b' or 37b") that supply or draw water or refrigerant to or from the respective compartment. At such areas, each of the opposite heat exchange plates 37a, 37b that delimit the compartment 10 has at least one respective protrusion 53a, 53b. The protrusions 53a of a contact plate 37a are in contact with the respective protrusions 53b of the other contact plate 37b, defining at least one fluid passage opening 54 that connects the compartment 50 to the duct or passage (37a', 37a", 37b' or 37b") that supplies or draws the water or the refrigerant fluid to or from the compartment 50, and is arranged at the perimeter of such duct or passage.

While the structural loads between the heat exchange plates 37a and 37b are generally borne by the finned sheets 39c and 39d, in areas not covered by such plates the loads are borne by the protrusions 53a and 53b. Such contrivance allows the structural strength of the condenser 15 to be increased and thus makes it suitable for use in the system described above with reference to figure 1, which provides for relatively high operating pressures and mechanical stresses.

## Claims

1. Air conditioning system for buses, comprising
a refrigerant circuit (10), the refrigerant circuit (10) comprising a compressor (11) for circulating a refrigerant fluid, a condenser (15), an expansion valve (16) and an evaporator (13),
wherein the condenser (15) is a water-cooled condenser, the condenser (15) being designed for heat exchange between the refrigerant fluid and water of a water circuit (20), wherein the water is cooled by means of a radiator (25),
wherein the condenser (15) is formed of a plate heat exchanger, comprising
- a first and a second support end plate (31, 32) on which inlet and outlet connectors (33, 34, 35, 36) for refrigerant fluid and water are arranged,
- a stack (37) of heat exchange plates interposed between said first and second support end plates, among which there is defined a plurality of first compartments for the passage of the refrigerant fluid and a plurality of second compartments for the passage of water, alternating with the first compartments, and
- a plurality of finned sheets (39c, 39d), each of which is arranged within a respective first or second compartment,
the system being **characterized by** the fact that on each of said first and second support plates of the condenser (15) a respective reinforcement plate (41) is brazed externally, the reinforcement plate covering a central area of the support end plate (31, 32), leaving four corner areas of the support end plate (31, 32) free,
wherein each finned sheet (39c, 39d) extends in such a way as to cover almost entirely the extension of the respective compartment (50), defining at least one free area wherein the finned sheet (39c, 39d) is absent, said free area being positioned around a duct (37a', 37a", 37b' or 37b") for the transport of fluid to or from the compartment (50), said duct being arranged in a corner of the compartment (50), wherein the opposite heat exchange plates (37a, 37b) that delimit the compartment (50) have, in the free area, respective protrusions (53a, 53b) in contact with each other, said protrusions defining at least one fluid passage opening (54) arranged at the perimeter of said duct (37a', 37a", 37b' or 37b") and connecting the compartment (50) to said duct.

2. System according to claim 1, wherein the water circuit (20) further comprises a pump (21) for circulating water and an expansion tank (23).

3. System according to claim 1 or 2, wherein the reinforcement plate (41) comprises a folded edge (42) outwardly extending from the support end plate (31, 32).

## Patentansprüche

1. Klimatisierungssystem für Busse, aufweisend
einen Kältemittelkreislauf (10), wobei der Kältemittelkreislauf (10) einen Kompressor (11) zum Umwälzen eines Kältemittels, eine Kondensatoreinrichtung (15), ein Expansionsventil (16) und einen Verdampfer (13) aufweist,
wobei die Kondensatoreinrichtung (15) eine wassergekühlte Kondensatoreinrichtung ist, wobei die Kondensatoreinrichtung (15) zum Wärmeaustausch zwischen dem Kältemittel und Wasser eines Wasserkreislaufs (20) ausgelegt ist, wobei das Wasser mittels eines Kühlers (25) gekühlt wird,
wobei die Kondensatoreinrichtung (15) aus einem Plattenwärmetauscher gebildet ist, aufweisend
- eine erste und eine zweite Träger-Endplatte (31, 32), auf welchen Einlass- und Auslassanschlüsse (33, 34, 35, 36) für Kältemittel und Wasser angeordnet sind,
- einen Stapel (37) von Wärmetauscherplatten zwischen den ersten und zweiten Träger-Endplatten, zwischen denen eine Mehrzahl von ersten Kammern zum Durchlauf des Kältemittels und eine Mehrzahl von zweiten Kammern zum Durchlauf von Wasser, welche sich mit den ersten Kammern abwechseln, definiert ist,
- eine Mehrzahl von Rippenblechen (39c, 39d), von denen jedes innerhalb einer jeweiligen ersten oder zweiten Kammer angeordnet ist,
wobei das System **dadurch gekennzeichnet ist, dass** an jede der ersten und zweiten Trägerplatten der Kondensatoreinrichtung (15) eine jeweilige Verstärkungsplatte (41) außen angelötet ist, wobei die Verstärkungsplatte einen zentralen Bereich der Träger-Endplatte (31, 32) abdeckt, wobei vier Eckbereiche der Träger-Endplatte (31, 32) freigelassen werden,
wobei jedes Rippenblech (39c, 39d) sich derart erstreckt, dass es die jeweilige Kammer (50) über beinahe ihre gesamte Erstreckung abdeckt, wodurch mindestens ein freier Bereich festgelegt wird, in welchem das Rippenblech (39c, 39d) fehlt, wobei der freie Bereich um einen Kanal (37a', 37a", 37b' oder 37b") zum Transport von Flüssigkeit zu der Kammer (50) hin oder von dieser weg angeordnet ist, wobei der Kanal in einer Ecke der Kammer (50) angeordnet ist, wobei die gegenüberliegenden, die Kammer (50) begrenzenden Wärmetauschplatten (37a, 38b) in dem freien Bereich entsprechende miteinander in Kontakt stehende Vorsprünge (53a, 53b) aufweisen, wobei die Vorsprünge mindestens eine Fluiddurchgangsöffnung (54) definieren, welche an dem Außenrand des Kanals (37a', 37a", 37b' oder 37b") angeordnet ist und die Kammer (50) mit dem Kanal verbindet.

2. System nach Anspruch 1, wobei der Wasserkreislauf (20) weiter eine Pumpe (21) zum Umwälzen des Wassers und einen Expansionsbehälter (23) aufweist.

3. System nach Anspruch 1 oder 2, wobei die Verstärkungsplatte (41) eine gefaltete Kante (42) aufweist, die sich von der Träger-Endplatte (31, 32) nach außen erstreckt.

## Revendications

1. Système de climatisation pour bus, comprenant
un circuit frigorifique (10), le circuit frigorifique (10) comprenant un compresseur (11) pour faire circuler un fluide frigorigène, un condenseur (15), un détenteur (16) et un évaporateur (13),
dans lequel le condenseur (15) est un condenseur refroidi à l'eau, le condenseur (15) étant conçu pour un échange de chaleur entre le fluide frigorigène et de l'eau d'un circuit d'eau (20), dans lequel l'eau est refroidie au moyen d'un radiateur (25),
dans lequel le condenseur (15) est formé d'un échangeur de chaleur à plaques, comprenant
- une première et une seconde plaque d'extrémité de support (31, 32) sur lesquelles sont agencés des raccords d'entrée et de sortie (33, 34, 35, 36) pour le fluide frigorigène et l'eau,
- un empilement (37) de plaques d'échange de chaleur interposées entre lesdites première et seconde plaques d'extrémité de support, parmi lesquelles sont définis une pluralité de premiers compartiments pour le passage du fluide frigorigène et une pluralité de seconds compartiments pour le passage d'eau, en alternance avec les premiers compartiments, et
- une pluralité de feuilles à ailettes (39c, 39d), dont chacune est agencée au sein d'un premier ou second compartiment respectif,
le système étant **caractérisé par le fait que** sur chacune desdites première et seconde plaques de support du condenseur (15), une plaque de renfort (41) respective est brasée en externe, la plaque de renfort couvrant une zone centrale de la plaque d'extrémité de support (31, 32), laissant libres quatre zones de coin de la plaque d'extrémité de support (31, 32),
dans lequel chaque feuille à ailettes (39c, 39d) s'étend de manière à couvrir en quasi-totalité l'extension du compartiment (50) respectif, définissant au moins une zone libre d'où la feuille à ailettes (39c, 39d) est absente, ladite zone libre étant positionnée autour d'une conduite (37a', 37a", 37b' ou 37b") pour le transport de fluide vers ou depuis le compartiment (50), ladite conduite étant agencée dans un coin du compartiment (50), dans lequel les plaques d'échange de chaleur (37a, 37b) opposées qui délimitent le compartiment (50) ont, dans la zone libre, des protubérances (53a, 53b) respectives en contact l'une avec l'autre, lesdites protubérances définissant au moins une ouverture de passage de fluide (54) agencée au niveau du périmètre de ladite conduite (37a', 37a", 37b' ou 37b") et raccordant le compartiment (50) à ladite conduite.

2. Système selon la revendication 1, dans lequel le circuit d'eau (20) comprend en outre une pompe (21) pour faire circuler de l'eau et une cuve de détente (23).

3. Système selon la revendication 1 ou 2, dans lequel la plaque de renfort (41) comprend un bord plié (42) s'étendant vers l'extérieur depuis la plaque d'extrémité de support (31, 32).
